(19) **Europäisches Patentamt**
**European Patent Office**
**Office européen des brevets**

(11) **EP 1 785 034 A1**

(12) **EUROPEAN PATENT APPLICATION**

(43) Date of publication:
**16.05.2007 Bulletin 2007/20**

(51) Int Cl.:
*A21D 13/00* (2006.01)　　*A21D 8/06* (2006.01)
*A21D 13/04* (2006.01)

(21) Application number: **05024829.3**

(22) Date of filing: **14.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Kraft Foods R & D, Inc.**
**Zweigniederlassung München**
**81737 München (DE)**

(72) Inventors:
• **Froemberg, Sina**
**85521 Ottobrunn (DE)**

• **Kortum, Olaf Christoph**
**85579 Neubiberg (DE)**

(74) Representative: **HOFFMANN EITLE**
**Patent- und Rechtsanwälte**
**Arabellastrasse 4**
**81925 München (DE)**

Remarks:
Amended claims in accordance with Rule 86 (2) EPC.

(54) **Composite bakery product**

(57)　　The present invention provides a chilled bakery product comprising a bread-type dough component and a filling component, wherein the bakery product has a water activity ($a_w$) of more than 0.95 and the dough component after baking has a pH of less than 7. The invention also provides a process of manufacturing the bakery product of the invention.

**EP 1 785 034 A1**

**Description**

The present invention relates to a chilled bakery product (snack product) comprising a bread-type dough component and a filling component. Moreover, the invention relates to a method of manufacturing said bakery product.

**Background Art**

Certain conventional snack foods consist of a bread-type dough component and a filling component, wherein the dough component is baked either before or after introducing the filling component. In order to prevent an easy spoiling of the snack food by microorganisms and, thus, to allow for a prolonged storage stability under ambient conditions, such snack foods are conventionally adjusted to exhibit a water activity significantly below 0.95.

The water activity ($a_w$) is defined as the percent equilibrium relative humidity (% ERH) divided by 100. It can also be defined as the ratio of the water vapor pressure over a food (p) to that over pure water ($p_0$):

$$a_w = p/p_0$$

Multiplication of the water activity by 100 gives the relative humidity of the atmosphere in equilibrium with the food:

$$ERH(\%) = 100 \times a_w$$

 In practice, the water activity is a measure of "free" water in a food sample as opposed to "bound" water. Water activity merits closer attention as it is a critical factor that determines the shelf life of food products. While temperature, pH and several other factors can influence whether an organism will grow in a food and the rate at which it will grow, water activity may be regarded as the most important factor. Most bacteria do not grow at water activities below 0.91, and most moulds cease to grow at water activities below 0.80. By measuring the water activity of foodstuffs, it is possible to predict which microorganisms will and will not be potential sources of spoilage.

Many composed bakery snacks contain fairly high sugar contents. On the one hand, a high content of sugar, i.e. polysaccharide, introduces more free hydroxyl groups into the dough component or filling component of the bakery snack and, therefore, offers specific polar sides that may bind water by hydrogen bonding so that the water activity is reduced. On the other hand, the nutritional values of such products are not considered appropriate. There are also refrigerated composite bakery products known, for example cheesecake-type products, biscuit-type dough products with cream filling and similar products, but their fillings have a low water activity owing to a high sugar content and, therefore, possess the same inferior nutritional quality. Other composed bakery snacks are frozen to provide the desired shelf life. Yet, they require an additional heat treatment by the consumer prior to consumption. Finally, there are unrefrigerated composite bakery snacks that may have an acceptable nutritional value. However, they are intended for direct consumption, for example directly from the bakery shop, and do not exhibit prolonged storage stability.

US 6,299,916 B1, assigned to Kraft Foods, Inc., discloses a baked, shelf-stable, hand-held snack bar comprised of a crust and a smooth, creamy cheesecake-like filling. The filling and crust are each formulated to a water activity of 0.60 - 0.90. US 2001/0002267 A1, assigned to Kraft Foods, Inc., describes a low moisture cheesecake product having extended shelf life stability and including a crust the water activity of which ranges from about 0.40 to about 0.86 and a cheesecake filling the water activity of which ranges from about 0.76 to about 0.86. The water activity of the finished cheesecake product ranges from about 0.60 to about 0.86. The shelf life stability of the cheesecake product is stated to be at least about 3 months at refrigerated temperature. US 2002/0146490 A1, assigned to Kraft Foods Holdings, Inc., describes a fully baked, soft breadstick product having a water activity in the range of about 0.9 to 0.95 and being suited for use in a refrigerated, ready-to-eat kit. This breadstick is an unfilled bakery product.

EP 0 826 306 A1, assigned to Unilever, describes a shelf-stable filled bakery product comprising a baked dough shell having a water activity in the range of about 0.60 to 0.95, a filling to be introduced as a core into the baked dough shell in pasteurized form and having a water activity of about 0.20 to 0.99 and a pH of about 3.5 to 7, and a packaging sealed against penetration of humidity. After baking and prior to the filling step, the baked dough shell is cooled down to room temperature. The bakery product is said to be storage stable at ambient temperature, i.e. without refrigeration, for at least about three months.

In view of the knowledge about the prior art bakery snacks, the present inventors have created a more nutritionally valuable composite bakery product by employing an overall water activity ($a_w$) of more than 0.95 in combination with a reduced pH. In the composite bakery product, which is intended for refrigerated distribution, the filling can be designed much more nutritionally valuable.

## Disclosure of the Invention

In accordance with the present invention, there is provided a bakery product comprising a bread-type dough component and a filling component, wherein the bakery product has a water activity ($a_w$) of more than 0.95 and the dough component after baking has a pH of less than 7. The water activity refers to the $a_w$ value of the complete bakery product, i.e. the bread-type dough after baking and filling. The pH, however, refers to the pH value of the dough after baking and prior to filling.

The invention also pertains to a process of manufacturing the bakery product of the invention, which comprises the following steps:

  1) mixing of dough ingredients to a homogenous dough,

  2) pre-forming dough parts from the dough and optionally placing the pre-formed dough parts in specially shaped moulds,

  3) baking of the pre-formed dough parts, and

  4) immediate post-bake filling of the hot baked dough parts via injection with the filling component.

It has been found that the filled bakery product of the invention is capable of exhibiting a shelf life of up to three months under refrigerated conditions, providing still a very good taste after such period.

## Brief Description of the Drawing

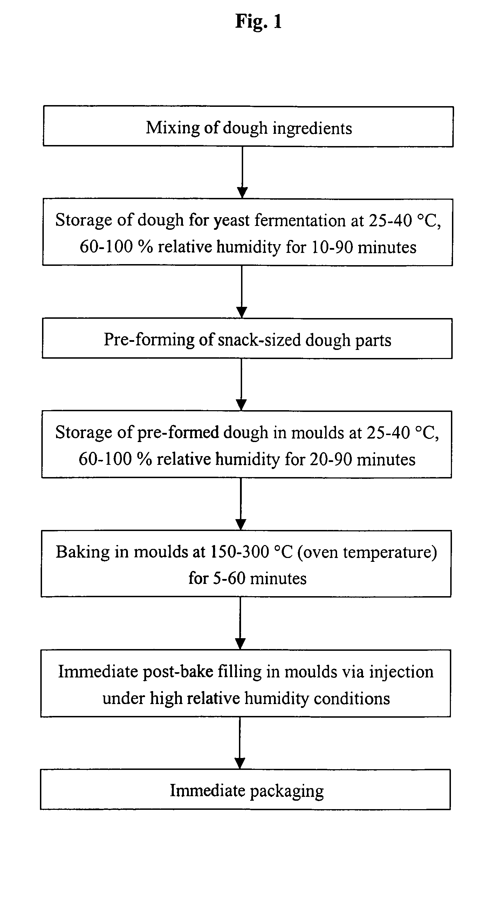

  Figure 1 illustrates an embodiment of manufacturing the bakery snack of the present invention.

## Detailed Description of the Invention

The water activity of a yeast risen dough is around 0,98-0,99 prior to baking. In the course of baking, the water activity usually decreases. Thus, one attempts to kept the moisture by steam flushing at the beginning of baking. Another component that influences the water activity of the bakery product of the invention is the filling. The water activity of the filling can be adjusted by using a humectant such as glycerin.

The bakery product of the invention has a water activity of 0.95 or more, more preferably 0.96 or more and less than 0.99, more preferably about 0.97 in order to balance a moist filling taste and an appropriate, i.e. not a soggy, taste of the baked dough component. The water activity of the bakery product of the invention is determined at ambient temperature (25°C) as explained in more detail in the experimental section.

The pH of the baked dough component of the bakery product of the invention is preferably in the range of 3.5 to 7, more preferably 4.0 to 6. Even more preferably, the pH value of the baked dough component is not more than 5. The pH of the baked dough component is measured in an aqueous slurry at ambient temperature (20 °C) as explained in more detail in the experimental section. The pH may be adjusted by admixing appropriate agents, such as food approved organic and inorganic acids, to the dough prior to baking.

The dough component may be a dough for leavened or unleavened bread. The leavening agent for leavened bread may be a chemical leavening agent, such as baking powder (for instance, a combination of sodium bicarbonate and an acid component), or a yeast leavening agent. A yeast leavened dough, such as sourdough, is a preferred embodiment of the invention. It may be necessary to reduce the pH of the dough, especially if a sweet dough is used. For this purpose, various acids or acid-generating agents may be used, such as citric acid.

In one embodiment of the invention, the dough component is yeast leavened, low in and optionally includes whole grain components, added minerals and added vitamins. "Low in fat" means that is has a level of 0 to 20 % by weight of fat, based on the total mass of the dough, more preferably 0 to 20 % by weight of fat.

The filling may be selected from savory (salty) fillings and sweet fillings. The filling may be based on dairy ingredients and is preferably low in fat and sugar. "Low in fat" with regard to the filling means that it has a level of 0 to 40 % by weight of fat, based on the total mass of the filling, more preferably 0 to 16 % by weight of fat. "Low in sugar" means that the filling has a sugar content of 0 to 30 % by weight, based on the total mass of the filling, more preferably 0 to 10 % by weight. For example, the filling may be a cheese or cream cheese filling, or it may be a chocolate or fruit filling. Vitamins may be added to the filling, in particular in case of a fruit filling. If a nutritionally valuable bakery product is desired, it is preferable to use a calorie reduced filling, more preferably one having a calorific value of not more than 200 calories per serving of 30-50g. In order to deliver a balanced chilled bakery product, the filling preferably has a pH in the same range as the baked dough component of the bakery product, i.e. the pH of the filling is preferably in the range of 3.5 to 7, more preferably 4.0 to 6, and even more preferably not more than 5. The pH of the filling may be adjusted by admixing appropriate agents, for preservation and/or taste purposes.

Owing to the specific combination of water activity and pH which is preferably balanced for (baked) dough and filling, the bakery product of the invention has intrinsic microbiological stability preventing the development of pathogens. However, it is possible to add a preservative, to the dough or filling component, even though this may not be desirable depending on the consumers at which a specific bakery product of the invention is directed. Similarly, it is possible to add an anti-staling agent to the dough.

The bakery product of the invention is preferably a refrigerated bakery product which is stored at a temperature of less than 15 °C, more preferably at a temperature in the range of 4 to 8 °C.

In one embodiment, the bakery product of the present invention is ready to eat. Preferably, the bakery product of the invention is packaged in a sealed container, for example in a sealed bag made from plastic or composite aluminum foil. The foil is preferably impermeable to moisture and oxygen. Preferably, the packaging immediately follows the filling.

The bakery product of the invention can be manufactured in a process which comprises the following steps:

1) mixing of dough ingredients to a homogenous dough,

2) pre-forming dough parts from the dough and optionally placing the pre-formed dough parts in specially shaped moulds,

3) baking of the pre-formed dough parts, and

4) immediate post-bake filling of the hot baked dough parts via injection with the filling component.

If the dough is a yeast dough, it will be necessary to allow for fermentation of the yeast. This is usually done by allowing appropriate time in two steps 1a) and 2a), following steps 1) and 2), respectively:

1a) optionally storing dough for (yeast) fermentation,

2a) storing pre-formed dough parts in moulds.

While step 1a) is an optional step, step 2a) is a mandatory step if a yeast dough is used. The temperature for respective fermentation steps 1a) and 2a) is independently and preferably selected from the range of 25-40 °C, and the relative humidity in such treatment steps is independently and preferably selected from the range of 60-100 %. The storage time in step 1a) is preferably 10 to 90 minutes, whereas it is preferably 20 to 90 minutes in step 2a).

The dough parts are preferably baked at a temperature of 150-300 °C (oven temperature) for 5-60 minutes.

The filling operation in step 4) immediately follows the baking step 3), so that the baked dough part is still hot when being filled. It is preferably carried out under high relative humidity, such as a relative humidity in the range of 60 to 80 %, so that a high water activity of the final bakery product is maintained.

Owing to the immediate post-bake filling step, the center of the dough part is porous enough to accommodate up to 80 % filling, based on the mass of the total bakery product. The degree of filling can, however, be varied according to necessity. If the filling step is conducted under clean conditions, the use of preservatives in the dough and/or filling may not be necessary.

Preferably, the filled bakery product is packaged immediately after the post-bake filling and is more preferably cooled or allowed to cool thereafter.

Additional operations may be used in the manufacturing process of the invention, for example coating the bakery product with, e.g., icing, sesame or poppy seed.

**Examples**

Following below, specific embodiments of the process and bakery product of the invention are exemplified.

(i) Determination of Water Activity ($a_w$)

The water activity ($a_w$ value) is determined at 25 °C using the instrument AquaLab Model XC-2 and following the manufacturer's instructions for the instrument. The linear offset of the instrument is verified against known salt standards, one of which displaying an $a_w$ above that of the sample and the other one displaying an $a_w$ below that of the sample. The $a_w$ of distilled water has to be 1.000 $\pm$ 0.003. The measurement of the $a_w$ value of the sample is repeated until two successive values differ by less than 0.003. The $a_w$ value assigned to the sample is the average of those two values.

(ii) Determination of pH

The pH of the dough component after baking is determined at 20 °C using the sample shredded and mixed with water at a ratio of 10 g of sample with 100 ml water. The pH electrode is verified against a standard acetate buffer solution of pH 4.55 at 20 °C. If not met (deviation exceeding 0.02 units), the pH electrode is calibrated using buffer solutions of pH 4.00 and 7.00.

Example 1 - Preparation of muffins filled with Philadelphia® cream cheese

Muffins were prepared and filled with Philadelphia® cream cheese according to the following protocol and using the ingredients and amounts shown in Table 1.

Make procedure:

1) dissolve yeast (brick) in warm water,

2) mix all ingredients in a Hobart mixer at level 3 for 5 minutes,

3) place dough in Miwe brew chamber, cover with lint-free cloth and leave at 27 °C for 30 minutes,

4) weigh and pre-form balls (8 g pre-baking weight), place in baking moulds in brew chamber, cover with lint-free cloth and leave at 27 °C for 45-60 minutes; observe balls with regard to size, bake earlier (< 1 hour) to avoid too big muffins,

5) bake at 200 °C for 10 minutes or 250° for 5 minutes (Trial 1) or at 200 °C for 12 minutes or 250 °C for 7 minutes (Trial 2), add moisture once after 2 minutes for glossy bread surface,

6) weigh muffins (Trial 1: 7.5 g; Trial 2: 8 g),

7) fill hot muffins with cream cheese filling having temperature in the range of 4-70 °C and using 6 to 10 g of filling,

8) package filled muffins when still hot.

Table 1 - Dough formulation for muffins

| Ingredients | Trial 1 | | | Trial 2 | | |
|---|---|---|---|---|---|---|
| | Sweet dough, pH reduced | | | Whole grain dough, pH reduced | | |
| | % based on total amount | bakers % based on flour | absolute amount (g) | % based on total amount | bakers % based on flour | absolute amount (g) |
| Wheat bran (with germ bud) | | | | 11.98 | 28.20 | 56.4 |
| Wheat Flour, Type 550 | 48.53 | | 200 | 42.49 | | 200 |
| Compressed Yeast | 2.43 | 5.00 | 10 | 2.40 | 5.65 | 11.3 |
| Glucose syrup 30DE | 7.28 | 15.00 | 30 | 6.37 | 15.00 | 30 |
| Salt | 0.00 | 0.00 | 0 | 0.34 | 0.80 | 1.6 |
| Sugar | 4.85 | 10.00 | 20 | 0.00 | 0.00 | 0 |
| Egg | 9.90 | 20.40 | 40.8 | 8.67 | 20.40 | 40.8 |
| Fat | 9.27 | 19.10 | 38.2 | 8.12 | 19.10 | 38.2 |
| Citric Acid | 0.38 | 0.78 | 1.56 | 0.19 | 0.45 | 0.9 |
| Water | 16.50 | 34.00 | 68 | 18.69 | 44.00 | 88 |

(continued)

| | Trial 1 | | | Trial 2 | | |
|---|---|---|---|---|---|---|
| | Sweet dough, pH reduced | | | Whole grain dough, pH reduced | | |
| Ingredients | % based on total amount | bakers % based on flour | absolute amount (g) | % based on total amount | bakers % based on flour | absolute amount (g) |
| Baking agent (enzymes, mono- and diglycerides) | 0.85 | 1.76 | 3.52 | 0.75 | 1.76 | 3.52 |
| Total | 100.00 | 106.04 | 412.08 | 100.00 | 135.36 | 470.72 |

Table 2 - Results

| Trial no. | $a_w$ value after baking (including filling) | Sensory assessment | pH before baking | pH after baking (without filling) |
|---|---|---|---|---|
| 1 | 0.97 | smooth surface, fluffy crust, soft, easy handling, not sticky, > 6 g filling | 4.7 | 4.5 |
| 2 | 0.97 | smooth surface, fluffy, easy to fill more than 6 g, but not such as in Trial 1), easy handling, not sticky | 4.7 | 4.5 |

Example 2 - Trial for establishing relationship between water activity and glycerin content in filling made from Philadelphia® cream cheese

Cream cheese fillings were produced by mixing the ingredients as summarized in Table 3 below. The water activity ($a_w$) was subsequently measured in accordance with the protocol indicated above.

Table 3 - Philadelphia® cream cheese filling

| Philly Crème | Trial 1 | | Trial 2 | | Trial 3 | | Trial 4 | |
|---|---|---|---|---|---|---|---|---|
| | % | g | % | g | % | g | % | g |
| Philadelphia Full fat | 77.46 | 1161.9 | 76.46 | 1146.9 | 75.46 | 1131.9 | 74.46 | 1116.9 |
| Glycerin | 0 | 0 | 1 | 15 | 2 | 30 | 3 | 45 |
| Citric acid | 0.1 | 1.5 | 0.1 | 1.5 | 0.1 | 1.5 | 0.1 | 1.5 |
| Salt | 0.3 | 4.5 | 0.3 | 4.5 | 0.3 | 4.5 | 0.3 | 4.5 |
| Other carbohydrates | 22.14 | 332.1 | 22.14 | 332.1 | 22.14 | 332.1 | 22.14 | 332.1 |
| Subtotal | 100 | 1167.9 | 100 | 1167.9 | 100 | 1167.9 | 100 | 1167.9 |
| | | | | | | | | |
| Philly Crème | Trial 5 | | Trial 6 | | Trial 7 | | Trial 8 | |
| | % | g | % | g | % | g | % | g |
| Philadelphia Full fat | 73.46 | 1101.9 | 72.46 | 1086.9 | 71.46 | 1071.9 | 70.46 | 1056.9 |
| Glycerin | 4 | 60 | 5 | 75 | 6 | 90 | 7 | 105 |
| Citric acid | 0.1 | 1.5 | 0.1 | 1.5 | 0.1 | 1.5 | 0.1 | 1.5 |
| Salt | 0.3 | 4.5 | 0.3 | 4.5 | 0.3 | 4.5 | 0.3 | 4.5 |

(continued)

| Philly Crème | Trial 5 | | Trial 6 | | Trial 7 | | Trial 8 | |
|---|---|---|---|---|---|---|---|---|
| | % | g | % | g | % | g | % | g |
| Other carbohydrates | 22.14 | 332.1 | 22.14 | 332.1 | 22.14 | 332.1 | 22.14 | 332.1 |
| Subtotal | 100 | 1167.9 | 100 | 1167.9 | 100 | 1500 | 100 | 1500 |

Table 4 - Results

| Trial | 1 | 2 | 3 | 4 | 5 | 6 | 7 | 8 |
|---|---|---|---|---|---|---|---|---|
| $a_W$ | 0.979 | 0.975 | 0.973 | 0.969 | 0.965 | 0.964 | 0.952 | 0.940 |
| pH | 4.610 | 4.590 | 4.570 | 4.660 | 4.660 | 4.650 | 4.620 | 4.620 |

Example 3 - Preparation of nutritionally valuable sweet filling

A milk/chocolate filling was prepared having a high calcium content a low fat content (< 10 %) and a fairly low sugar content, following the protocol and using the ingredients and amounts shown in Tables 5 and 6.

Make procedure:

1) heat milk in cooker (Stephan cooker processor),
2) add all ingredients except chocolate and heat to 85 °C under stirring using shear rate in the range of 500 to 700 rounds per minute,
3) add pre-molten chocolate under stirring,
4) cool to 15 °C and reduce shear mixing to 300 rounds per minute,
5) fill in baker bags and use to fill hot baked dough parts.

Table 5 - Milk/chocolate filling formulation

| Ingredient | % | g |
|---|---|---|
| Milk 0.3 % fat | 54.75 | 2190 |
| Chocolate | 25 | 1000 |
| Cocoa powder/liquor powder | 2 | 80 |
| Sugar | 6 | 240 |
| Modified starch | 9.62 | 384,8 |
| Glycerin | 2 | 80 |
| Potassium sorbate | 0.1 | 4 |
| Flavor | 0.23 | 9.2 |
| Acidifying agent | 0,3 | 12 |
| Total | 100 | 4000 |

Table 6 - Results

| Trial | $a_W$ value | pH value |
|---|---|---|
| 1 | 0.97 | 4.55 |

**Claims**

1.  A bakery product comprising a bread-type baked dough component and a filling component, wherein the bakery product has a water activity of more than 0.95 and the baked dough component has a pH of less than 7.

2.  The bakery product according to claim 1, wherein the water activity of the bakery product is in the range of 0.96 to 0.99.

3.  The bakery product according to claim 1 or 2, wherein the pH of the baked dough component is in the range of 3.5 to 7.

4.  The bakery product according to claim 3, wherein the pH of the baked dough component is in the range of 4.0 to 6.

5.  The bakery product according to any one of claims 1 to 4, wherein the dough component is a yeast leavened dough.

6.  The bakery product according to any one of claims 1 to 5, wherein the filling is selected from the group consisting of savory fillings and sweet fillings.

7.  The bakery product according to any one of claims 1 to 6, which is a refrigerated bakery product.

8.  The bakery product according to any one of claims 1 to 7, which is ready to eat.

9.  The bakery product according to any one of claims 1 to 8, which is packaged in a sealed container.

10. A process of manufacturing the bakery product as defined in any one of claims 1 to 9 and comprising the steps of:

    1) mixing of dough ingredients to a homogenous dough,
    2) pre-forming dough parts from the dough and optionally placing the pre-formed dough parts in specially shaped moulds,
    3) baking of the pre-formed dough parts, and
    4) immediate post-bake filling of the hot baked dough parts via injection with the filling component.

11. The process according to claim 10, wherein the dough is an optionally pH-adjusted yeast dough and step 1) is optionally followed by a step 1a) wherein the dough is stored for yeast fermentation, and wherein step 2) is followed by a step 2a) wherein the pre-formed dough parts are stored for yeast fermentation.

12. The process according to claim 11, wherein step 1a) is carried out at 25-40 °C and 60-100 % relative humidity for 10-90 minutes.

13. The process according to claim 11 or 12, wherein step 2a) is carried out at 25-40 °C and 60-100 % relative humidity for 20-90 minutes.

14. The process according to any one of claims 10 to 13, wherein the baking step is carried out at 150-300 °C (oven temperature) for 5-60 minutes.

15. The process according to any one of claims 10 to 14, wherein the bakery product is packaged immediately after the post-bake filling of step 4).


**Amended claims in accordance with Rule 86(2) EPC.**

1. A bakery product comprising a bread-type baked dough component and a filling component, wherein the bakery product has a water activity of more than 0.95 and the baked dough component has a pH of less than 7, wherein the bakery product is obtainable by post-bake injection-filling of the hot baked dough component with the filling component.

2. The bakery product according to claim 1, wherein the water activity of the bakery product is in the range of 0.96 to 0.99.

3. The bakery product according to claim 1 or 2, wherein the pH of the baked dough component is in the range of 3.5 to 7.

**4.** The bakery product according to claim 3, wherein the pH of the baked dough component is in the range of 4.0 to 6.

**5.** The bakery product according to any one of claims 1 to 4, wherein the dough component is a yeast leavened dough.

**6.** The bakery product according to any one of claims 1 to 5, wherein the filling is selected from the group consisting of savory fillings and sweet fillings.

**7.** The bakery product according to any one of claims 1 to 6, which is a refrigerated bakery product.

**8.** The bakery product according to any one of claims 1 to 7, which is ready to eat.

**9.** The bakery product according to any one of claims 1 to 8, which is packaged in a sealed container.

## Fig. 1

```
┌─────────────────────────────────────────────────┐
│            Mixing of dough ingredients            │
└─────────────────────────────────────────────────┘
                         │
                         ▼
┌─────────────────────────────────────────────────┐
│  Storage of dough for yeast fermentation at 25-40 °C, │
│    60-100 % relative humidity for 10-90 minutes   │
└─────────────────────────────────────────────────┘
                         │
                         ▼
┌─────────────────────────────────────────────────┐
│         Pre-forming of snack-sized dough parts    │
└─────────────────────────────────────────────────┘
                         │
                         ▼
┌─────────────────────────────────────────────────┐
│  Storage of pre-formed dough in moulds at 25-40 °C, │
│    60-100 % relative humidity for 20-90 minutes   │
└─────────────────────────────────────────────────┘
                         │
                         ▼
┌─────────────────────────────────────────────────┐
│  Baking in moulds at 150-300 °C (oven temperature) │
│                  for 5-60 minutes                 │
└─────────────────────────────────────────────────┘
                         │
                         ▼
┌─────────────────────────────────────────────────┐
│  Immediate post-bake filling in moulds via injection │
│       under high relative humidity conditions     │
└─────────────────────────────────────────────────┘
                         │
                         ▼
┌─────────────────────────────────────────────────┐
│              Immediate packaging                  │
└─────────────────────────────────────────────────┘
```

**European Patent Office**

**EUROPEAN SEARCH REPORT**

Application Number

EP 05 02 4829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 826 306 A (UNILEVER PLC; UNILEVER N.V) 4 March 1998 (1998-03-04) * column 2, line 45 - column 3, line 44 * * column 4, line 8 - column 5, line 11 * * claim 1 * | 1-15 | A21D13/00 A21D8/06 A21D13/04 |
| X | EP 0 162 644 A (UNITED BISCUITS LIMITED) 27 November 1985 (1985-11-27) * claims 1,4; example 1 * | 1-15 | |
| X | EP 1 488 704 A (KRAFT FOODS HOLDINGS, INC) 22 December 2004 (2004-12-22) * paragraph [0068]; claim 1; table 3 * | 1-15 | |
| X | EP 1 256 280 A (KRAFT FOODS R&D, INC) 13 November 2002 (2002-11-13) * claims 1,6,10; example * | 1-9 | |
| A | WO 99/02039 A (KRAFT FOODS, INC; COLEMAN, EDWARD, C; BIRNEY, SHARON, R; STUBBLEFIELD,) 21 January 1999 (1999-01-21) * claims 1,5 * | 1-15 | TECHNICAL FIELDS SEARCHED (IPC) A21D |
| A | EP 1 147 707 A (SOCIETE DES PRODUITS NESTLE S.A) 24 October 2001 (2001-10-24) * the whole document * | 1-15 | |
| A | EP 0 916 263 A (SOCIETE DES PRODUITS NESTLE S.A) 19 May 1999 (1999-05-19) * the whole document * | 1-15 | |

The present search report has been drawn up for all claims

| Place of search | Date of completion of the search | Examiner |
|---|---|---|
| Munich | 24 January 2006 | Smeets, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 02 4829

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2006

| Patent document cited in search report | | Publication date | Patent family member(s) | | Publication date |
|---|---|---|---|---|---|
| EP 0826306 | A | 04-03-1998 | AT | 242604 T | 15-06-2003 |
| | | | DE | 59610530 D1 | 17-07-2003 |
| EP 0162644 | A | 27-11-1985 | DE | 3584036 D1 | 17-10-1991 |
| | | | JP | 1985481 C | 25-10-1995 |
| | | | JP | 7016355 B | 01-03-1995 |
| | | | JP | 60256332 A | 18-12-1985 |
| | | | US | 4721622 A | 26-01-1988 |
| EP 1488704 | A | 22-12-2004 | CA | 2468276 A1 | 16-12-2004 |
| | | | US | 2004253347 A1 | 16-12-2004 |
| EP 1256280 | A | 13-11-2002 | AT | 248519 T | 15-09-2003 |
| | | | DE | 60100706 D1 | 09-10-2003 |
| | | | DE | 60100706 T2 | 15-07-2004 |
| | | | DK | 1256280 T3 | 05-01-2004 |
| | | | ES | 2204781 T3 | 01-05-2004 |
| | | | PT | 1256280 T | 30-01-2004 |
| | | | US | 2003031761 A1 | 13-02-2003 |
| WO 9902039 | A | 21-01-1999 | NONE | | |
| EP 1147707 | A | 24-10-2001 | AT | 279863 T | 15-11-2004 |
| | | | AU | 780990 B2 | 28-04-2005 |
| | | | AU | 3519901 A | 18-10-2001 |
| | | | CA | 2342526 A1 | 17-10-2001 |
| | | | DE | 60015077 D1 | 25-11-2004 |
| | | | IL | 142293 A | 31-10-2003 |
| | | | JP | 2001352896 A | 25-12-2001 |
| | | | NZ | 510908 A | 28-08-2002 |
| | | | PT | 1147707 T | 31-01-2005 |
| | | | US | 2001031294 A1 | 18-10-2001 |
| EP 0916263 | A | 19-05-1999 | AT | 290790 T | 15-04-2005 |
| | | | DE | 69829347 D1 | 21-04-2005 |
| | | | ES | 2237822 T3 | 01-08-2005 |
| | | | GB | 2331225 A | 19-05-1999 |

EPO FORM P0459

For more details about this annex : see Official Journal of the European Patent Office, No. 12/82

**EP 1 785 034 A1**

## REFERENCES CITED IN THE DESCRIPTION

**Patent documents cited in the description**

- US 6299916 B1
- US 20010002267 A1
- US 20020146490 A1
- EP 0826306 A1